# EUROPEAN PATENT SPECIFICATION

(11) **EP 0 897 491 B1**
(45) Date of publication and mention of the grant of the patent: **21.05.2003**
(21) Application number: 97919419.8
(22) Date of filing: 25.04.1997
(51) Int. Cl.: F16G 13/06, F16G 13/07

(54) **METHOD FOR CHAIN DRIVE AND CHAIN**
KETTENTRIEB UND KETTE DAFÜR
PROCEDE D'ENTRAINEMENT PAR CHAINE ET CHAINE UTILISEE DANS CE PROCEDE

(30) Priority: 03.05.1996 FI 961874
(43) Date of publication of application: 24.02.1999
(73) Proprietor: Finnketju Invest OY, 26510 Rauma (FI)
(72) Inventor: TUOMIKOSKI, Pekka, FIN-26410 Kaaro (FI)
(74) Representative: Kangasmäki, Reijo Holger
(86) International application number: PCT/FI97/00247
(87) International publication number: WO 97/042430

(56) References cited:
- DE-C- 97 792
- GB-A- 1 309 685

## Description

The invention relates to a method for providing a chain drive, whereby the chain, such as a transmission chain and/or conveyor chain, is formed of several shaped pieces that are connected to each other one after another at jointing points by means of joint pins, the cross section of which changes in the longitudinal direction of these joint pins. The chain is driven by means of a wheel arrangement that includes at least one chain wheel, such as a drive wheel or a turning wheel.

The method according to the invention may be exploited even with a so called traditional chain structure, in which the power transmission of the chain structure is being transmitted by a drive wheel, the tooth shape of which is usually standardized. The meaning of the invention is of importance in more developed chain structures, also, in which e.g. the supporting surface of the chain comprises notches that are crosswise in respect to the moving direction of the chain and that are during conveying of the chain in cooperation with counterpart surfaces, such as drive pins or like belonging to the chain wheel, that are arranged according to the notches and essentially crosswise in respect to the moving direction.

The type of developed chain structure described above is previously known e.g. from Finnish Patents number 64707 or number 91798. The shaped piece being represented in these Patents comprises a notch existing crosswise in respect to the moving direction of the chain, the lenght of which corresponds to the width of the shaped piece, and which is advantageously placed near the other link point of the shaped piece. In this case when the chain bends on the drive wheel an advantageous lever arm is achieved, thanks to which the chain force influencing the chain structure presses the notches of the chain harder against the pins of the drive wheel. This solution decreases significantly a so called skipping of the chain. In addition to that due to the lever arms being achieved the chain structure disengages easily from the chain wheel on the releasing side, whereby a so called non-disengagement of the chain is prevented.

The chain structure according to Patent FI 64707 has proved to be significantly better than corresponding earlier solutions, particularly thanks to the lever arms being achieved. In certain purposes, such as in chain structures being used in water refineries, plastics or corresponding non-metallic materials have been exploited because of corrosion and to decrease the specific gravity of the chain. In this case in certain applications there has been found problems that are caused by bending forces directed to the chain in the level corresponding the joint pins e.g. because of natural bending of the chain when the chain is being used in such position that the joint pins are in a vertical position. Due to this during cooperation between ordinary straight joint pins and corresponding straight counterpart surfaces, existing in the shaped piece, with even a small angular alteration there is such a consequence that the counterpart surfaces of successive shaped pieces are in contact with each other only by the other edge of the same. This naturally causes wearing of both the joint pins and counterpart surfaces, because the surface pressures are very high e.g. when the chain starts to move in such a bended situation as described above.

The above applies to the solution according to Patent FI 91798, also. The purpose of this solution is mainly to improve functioning of the chain particularly with a view to skipping and non-disengagement of the chain, in which respect with the solution in question there has been achieved remarkable improvement when compared to traditional solutions particularly in certain types of purposes. In the solution according to FI 91798, the free longitudinal internal measure of the notches of the chain is arranged to change, in which case, when the notches formed by the shaped pieces of the chain are in cooperation with the counterpart surfaces of the drive wheel, the free longitudinal internal measure of each notch may be altered to correspond to the contact lenght of the corresponding counterpart surface, that is the diameter of the drive pin. With this solution the typical problems involved with solutions known previously, such as skipping and non-disengagement of the chain, may be avoided. In addition to that a chain of this type may be used with as high loads to both moving directions that has not been possible earlier with corresponding solutions.

Thus, when manufacturing chains nowadays for most heterogeneous purposes particularly from non-metallic materials, the bending stress directed to the chain has been a very big problem in practice. Because of this the chain starts to behave undesireably, sometimes even after a very short use, correcting of which requires changing of the chain. In practice this always causes disproportionately long interruptions for use and organizing problems both in storing and maintenance. In certain uses the bending stress described above may be so powerful that continous observing as well as maintenance measures are required with very short intervals e.g. to tighten the chain for removing of the clearances caused by wearing.

On the other hand from patent GB 1 309 685 a chain is known, which comprises identical links each of which is in the form of the fork, the base of which is introduced between the prongs of the fork of the preceding link and it is held there by means of a locking pin having shoulders passing through the aligned apertures of the said base and the said prongs. The apertures of the prongs have a cross section in the form of a buttonhole, which is wider near the base of the fork than at the front end of the fork so that the said pin can be introduced into the wide ends of the button holes in a direction transversely to the prongs and then shifted to the front of the fork so as to be imprisoned in the said narrow ends of the buttonholes by abutment of the prongs of the fork against the shoulders of the pin. The aperture of the said base is capable of being in alignment with the said wide ends so as to enable the locking pin to be introduced into the apertures of the prong and of the base when the two links are substantially at right angels to each other. The aperture of the base being in alignment with the said narrow ends, with consequent locking of the locking pin when the two links are substantially in alignment, abutment of the rear of the fork of the said link against the front of the fork of the said preceding link then preventing the aperture of the base from coming into alignment with the said wide ends. In this solution also the said aperture of the base widens out towards its two ends and in which the said pin comprises a central part in the form of a diabolo, the external profile of which corresponds to the internal profile of the said aperture so that the pin engaged in the aperture operates substantially as a swivel joint.

So the position, form and dimensions of the apertures and of the locking pin are such that, on the other hand the aperture in the base of one link cannot move into alignment with the wide ends of the button holes of the fork of the preceding link but, on the other hand, this alignment is possible when the two links are placed at right angels to each other. In this way, assembly and dismantling of the chain can only be carried out when the links are substantially perpendicular to each other, positions which the chain never takes up when in operation.

The chain shown in figure 2 of GB 1 309 685 has joint pins of bi-tapered form, i.e. the joint pins have not a uniformly increasing cross sectional area along the longitudinal direction of the respective pin. The bi-tapered form results in an optimized geometry with regard to both possible pending directions for each of which one of the two tapered portions of the pin is responsive. Therefore, bending forces in one of both possible directions are not fully satisfactorily counteracted due to the half length of the responsive tapered portion along the length of the pin. The chain known from GB 1 309 685 thus is not optimized with regard to chain running conditions when the chain is mainly bent in a single direction.

It is the aim of the method according to this invention to achieve a decisive improvement in the problems presented above and thus to raise substantially the level of knowledge in the field. To achieve this aim, the method according to the invention is primarily characterized in that wearing of the chain due to bending of the chain essentially along the longitudinal direction of the joint pins is minimized by providing joint pins having a uniformly increasing cross sectional area along said longitudinal direction such that the cross section extends continuously conically in one direction towards one end of the respective joint pin.

As the most important advantages of the method according to the invention may be mentioned its simplicity and also the simplicity of the practical structures enabled by the same as well as of the mounting measures related to the same. As described above, when exploiting advantageously e.g. joint pins that are continuously conical, the surface pressures may be optimized under all circumstances in a way that problematic bending of the chain may be even totally elimated in principle. In addition to that by exploiting the type of joint pins also mounting of the chain may be eased by the guiding effect of the conical joint pin.

Advantageous embodiments of the method according to the invention are presented in the dependent claims directed to the method.

The invention relates to a chain functioning according to the method, also, that is represented in greater detail in the preamble of the independent claim related to the same. The primary characteristics of the chain are represented in the characterizing part of the corresponding claim.

As the most important advantages of the chain according to the invention may be mentioned its simplicity and reliability, whereby thanks to the same it is possible to increase significantly the operating time of the chain. This is due to the fact that the surface pressures being caused by bending of the chain along the longitudinal direction of the joint pin may be minimized in a suprising and extremely advantageous way deviating from traditional solutions, by exploiting continuously conical joint pins. In this case during the bending situation of a chain, the joint pin and the corresponding counter part surface in the shaped piece tend to settle within each jointing point to a most advantageous position in respect to the mutual surface pressures. This is why high point surface pressures are avoided that are always directed to joint pins and corners of the counterpart surfaces of the shaped pieces of conventional right-angled solutions. One crucial advantage of the chain according to the invention is furthermore the fact that the chain may be mounted easily by influence of the guiding effect of the conical joint pins.

Advantageous embodiments of the chain according to the invention are represented in the dependent claims related to the chain.

In the following description, the invention is illustrated in detail with reference to the appended drawings. In the drawings,
- Fig. 1: represents as a side view a principle of an advantageous chain wheel arrangement,
- Figs 2a and 2b: represent a side view and a front view of an advantageous shaped piece being used in a chain exploiting the method according to the invention,
- Fig. 3: represents a side view of an advantageous chain according to the invention when a joint pin is being used, that is conical in a linear way,
- Fig. 4: shows an alternative solution in respect to fig. 3,
- Fig. 5: shows furthermore one alternative solution in respect to figs 3 and 4 above,
- Fig. 6a: shows bending of the chain according to the invention and
- Fig. 6b: shows bending of a conventional chain.

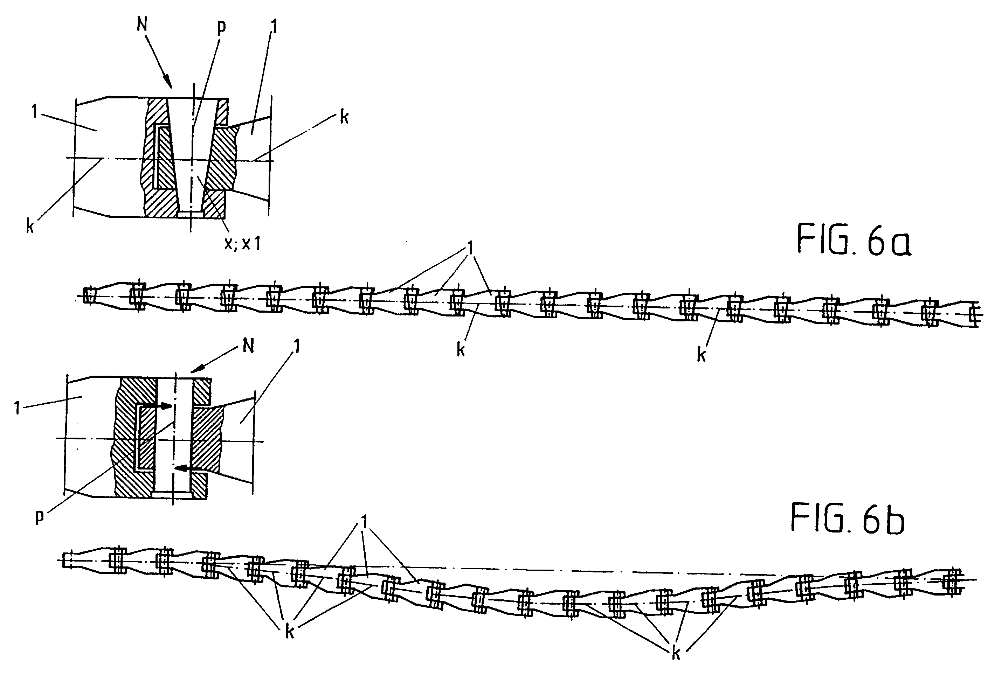

The invention relates to a method for providing a chain drive, whereby the chain, such as a transmission chain and/or a conveyor chain, is formed of several shaped pieces 1 that are connected to each other one after another at jointing points N by means of joint pins, the cross section of which changes in the longitudinal direction p of these joint pins x. The chain is driven by means of a wheel arrangement, that includes at least one chain wheel 7, such as a drive wheel or a turning wheel. Wearing of the chain due to bending of the chain essentially along the said longitudinal direction p is minimized by providing joint pins x having a uniformly increasing cross sectional area along said longitudinal direction p such that the the cross section extends continuously conically in one direction towards one end of the respective joint pin x. In this case an extensive bending as shown in fig. 6b that is typical for a conventional chain is avoided, but instead a situation represented in fig. 6a is achieved, whereby due to eliminating/decreasing of bending, the stresses and surface pressures being directed both to the joint pins as well as to the counter part surfaces being in contact with the above, have been efficiently minimized.

As an advantageous embodiment of the method a chain is being exploited therewith, the supporting surface 1b of which comprises notches 2 that are arranged essentially crosswise in respect to the moving direction s of the chain, and that are during conveying of the chain in cooperation with the counterpart surfaces 9, such as drive pins 9a or like belonging to the chain wheel 7 that are arranged according to the notches 2a and essentially crosswise in respect to the moving direction s. In this case each shaped piece 1 has two link points 4, 5, the first link point of which is a uniform projection 4 that is essentially narrower than the width 1 of the shaped piece, and the other one as a fork 5. Within both link points 4, 5, there exists holes 6, in which case to form a chain each jointing point N is formed by placing the said projection 4 of a previous shaped piece between the fork of a following shaped piece and by placing a joint pin or like in the holes 6. As an advantageous embodiment of the method, the contact area at the jointing points N that is due to the mutual angular alteration of the center lines k of the successive shaped pieces 1 of the chain, is being expanded by exploiting a joint pin (x; x1, x2, x3), the cross section of which is conical in a linear, convex or concave way.

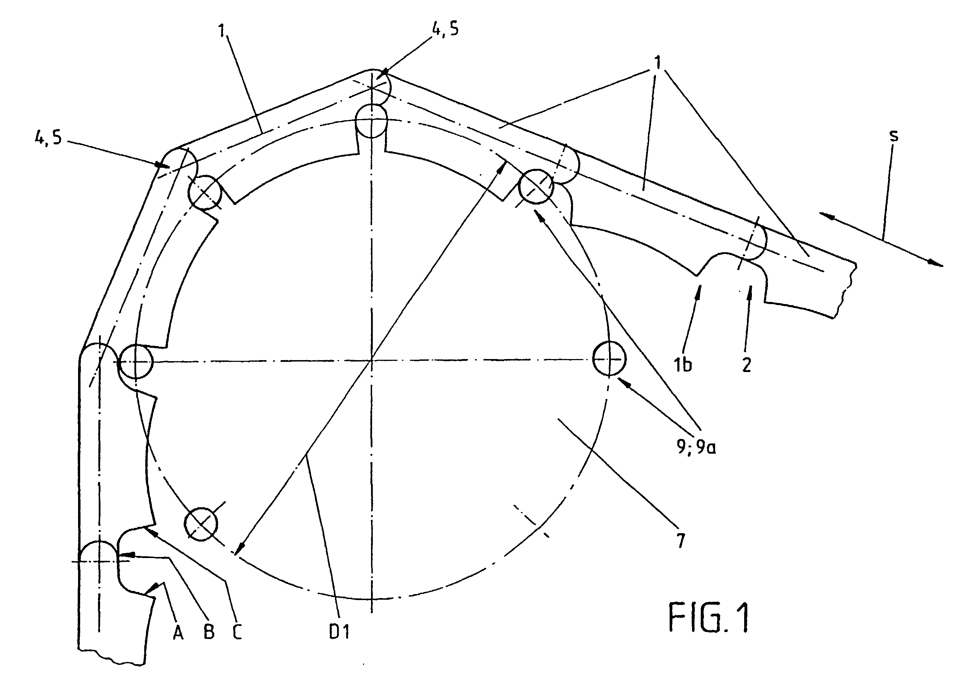

With reference to fig. 1 the chain according to the invention comprises thus several shaped pieces 1, connected to each other by the jointing points, and a wheel arrangement, which comprises at least one drive wheel 7 to convey the chain formed of the said shaped pieces 1. The supporting surface 1b of the chain comprises a notch 2 nereby the jointing point of each shaped piece 1 that is arranged crosswise in respect to the moving direction s and eccentrical in respect to the joint spacing that is formed of a contact edge A, a bottom B and a trailing edge C. The notches 2 of the chain are during conveying of the chain in cooperation with the counterpart surfaces 9 that is drive pins 9a belonging to the drive wheel 7 that are arranged to the notches 2 and crosswise in respect to the moving direction of the chain. The lenght of the pins 9a advantageously corresponds to the width L of the shaped pieces.

During the cooperation of the pins 9a and the notches 2 that starts from the end of the latter having the contact edge A, wherein the chain is at least starting to bend over the drive wheel, the width of the contact area that is formed advantageously corresponds to the width 1 of the shaped piece. After the said cooperation, when the chain straightens, the counterpart surface 9 leaves the notch 2 of the chain from the end having the trailing edge C. The free longitudinal internal measure of each notch 2 of the chain that is in a straight position, is essentially bigger than the contact lenght of the counterpart surface 9, which means in the presented embodiment the diameter of the drive pin 9a.

The free longitudinal internal measure of the notches 2 of the chain are thus arranged to change according to the patent FI 91798, whereby, when the notches 2 of the chain formed of the shaped pieces 1 are in cooperation with the counterpart surfaces 9 of the drive wheel 7, the free longitudinal internal measure of each notch 2 changes so that it corresponds to the diameter of the drive pins 9a. Naturally the method according to the invention may be applied in connection with conventionally functioning chains, also.

The chain being represented above has thus been improved particularly in such respect that wearing of the chain due to bending of the chain essentially along the longitudinal direction p of the joint pins x is minimized by applying a chain, the joint pins x of which have uniformly increasing cross sectional area along the said longitudinal direction p such that the cross section extends continuously conically in one direction towards one end of the respective joint pin x. In this way an extensive bending as shown in fig. 6b that is typical for a conventional chain is avoided, but instead a situation according to fig. 6a is achieved, whereby stresses and surface pressures being directed to both the joint pins as well as the counterpart surface, being in contact with the same, are very efficiently minimized due to eliminating/decreasing of the bending.

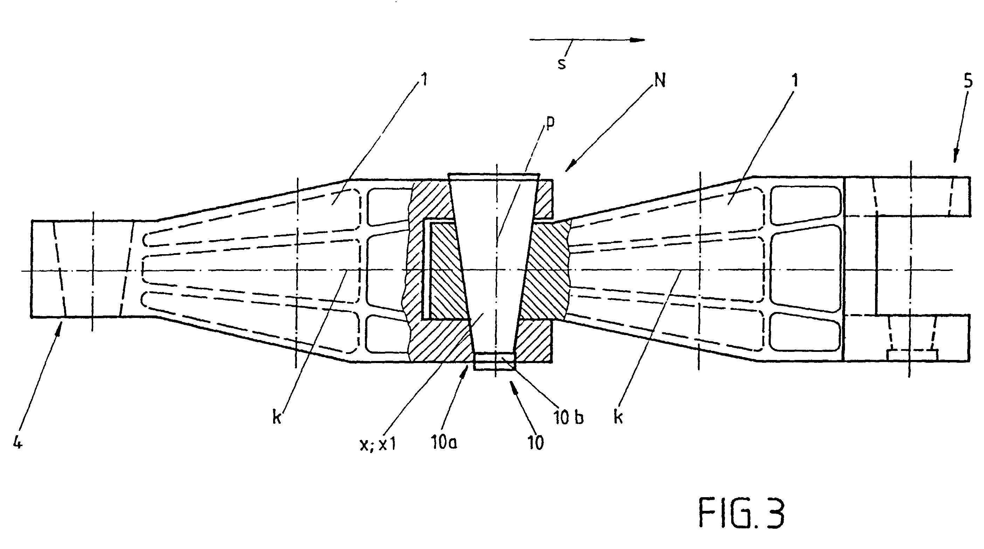

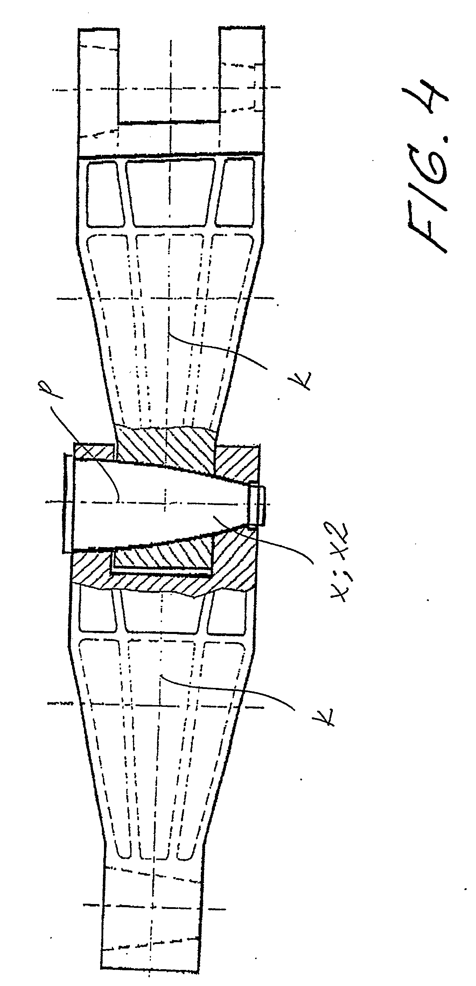

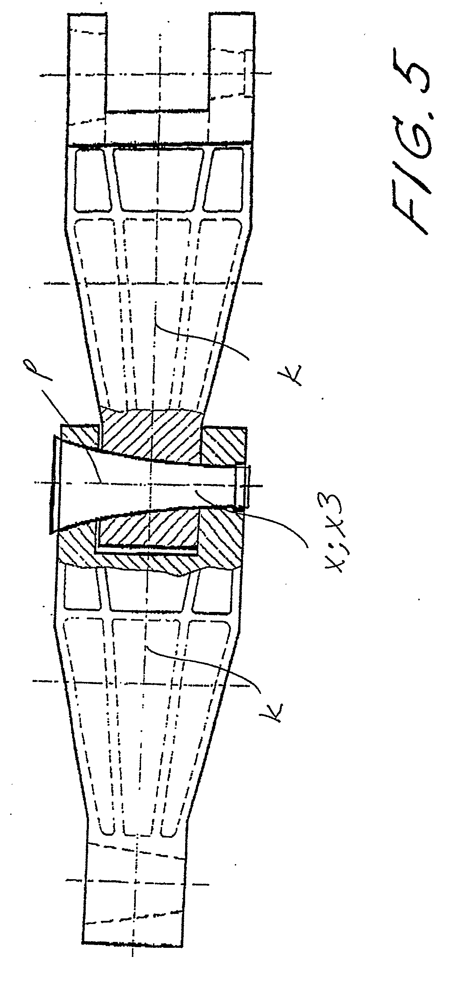

As an advantageous embodiment, to expand the contact area at the jointing point N that is due to the mutual angular alteration of the center lines k of the successive shaped pieces 1, as shown particularly in figs. 3 - 5, the chain has a joint pin x, the cross section of which is conical in a linear way according to fig. 3, conical in a convex way (fig. 4) or conical in a concave way (fig. 5). In addition to that, the joint pins x of the chain are of the same shape and they are placed in the same position at each link point 4, 5.

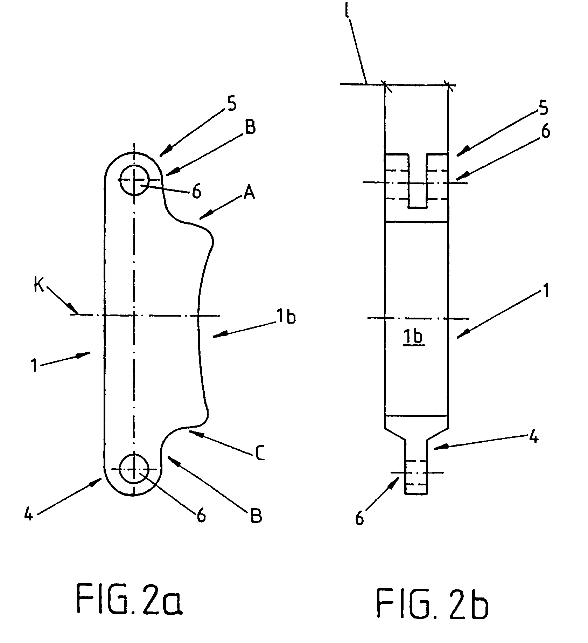

Furthermore with reference particularly to fig. 2, in connection with the narrower end of the jointing point N of the chain there has been arranged locking means 10, that are represented in the principal drawings by the locking grooves 10a in each shaped piece 1 and a cotter ring arrangements 10b in connection with the joint pin x. The joint pins may naturally be mounted in place by riveting as usual.

It is obvious that the invention is not limited to the embodiments presented or described above, but it can be modified within the basic idea even to a great extent. In this connection it may thus be possible to exploit at the jointing points of the successive shaped pieces joint pins that extend to opposite directions. It is also naturally possible to prepare the joint pins made of suitable materials in a way that there are integral projection arrangements in the joint pins enabling some kind of snap locking.

## Claims

1. Method for providing a chain drive, whereby the chain, such as a transmission chain and/or conveyor chain, is formed of several shaped pieces (1) that are connected to each other one after another at jointing points (N) by means of joint pins the cross section of which changes in the longitudinal direction (p) of these joint pins (x), whereby the chain is driven by means of a wheel arrangement that includes at least one chain wheel (7), such as a drive wheel or a turning wheel, **characterized in that** wearing of the chain due to bending of the chain essentially along the said longitudinal direction (p) is minimized by providing joint pins (x) having a uniformly increasing cross sectional area along the said longitudinal direction (p) such that the cross section extends continuously conically in one direction towards one end of the respective joint pin (x).

2. Method according to claim 1, whereby the supporting surface (1b) of the chain being used in connection with the method, comprises notches (2) that are arranged essentially crosswise in respect to the moving direction (s) of the chain, and that are during conveying of the chain in cooperation with the counterpart surfaces (9), such as drive pins (9a) or like belonging to the chain wheel (7), that are arranged according to the notches (2a) and essentially crosswise in respect to the moving direction (s), whereby to form the said jointing points (N) each shaped piece (1) has two link points (4, 5), the first link point of which is a uniform projection (4) that is essentially narrower than the width (1) of the shaped piece and the other one as a fork (5), whereby within both link points (4, 5) there exists holes (6), whereby to form a chain each jointing point (N) is formed by placing the said projection (4) of a previous shaped piece between the fork of a following shaped piece and by placing a joint pin (x) in the holes (6), **characterized in, that** the contact area at the jointing point (N) that is due to the mutual angular alteration of the center lines (k) of the successive shaped pieces (1) of the chain is being expanded by exploiting a joint pin (x; x1, x2, x3), the cross section of which is conical in a linear, convex or concave way.

3. Chain, such as a transmission chain and/or a conveyor chain, that is formed of several shaped pieces (1) that are connected to each other one after another at jointing points (N) by means of joint pins (x) the cross section of which changes in the longitudinal direction (p) of these joint pins (x), whereby the chain is driven by means of a wheel arrangement that includes at least one chain wheel (7), such as a drive wheel or a turning wheel, **characterized in that** to minimize wearing of the chain due to bending of the chain essentially along the said longitudinal direction (p) the joint pins (x) of the chain have uniformly increasing cross sectional area along the said longitudinal direction (p) such that the cross section extends continuously conically in one direction towards one end of the respective joint pin (x).

4. Chain according to claim 3, the supporting surface (1b) of which comprises notches (2) that are arranged essentially crosswise in respect to the moving direction (s) of the chain and that are during conveying of the chain in cooperation with the counterpart surfaces (9), such as drive pins (9a) or like belonging to the chain wheel (7), that are arranged according to the notches (2a) and essentially crosswise in respect to the moving direction (s), whereby to form the said jointing points (N) each shaped piece (1) has two link points (4, 5), the first link point of which is a uniform projection (4) that is essentially narrower than the width (1) of the shaped piece and the other one as a fork (5), whereby within both link points (4, 5), there exists holes (6), whereby to form a chain each jointing point (N) is formed by placing the said projection (4) of a previous shaped piece between the fork of a following shaped piece and by placing a joint pin (x) in the holes (6), **characterized in that**, to expand the contact area at the jointing point (N) that is due to the mutual angular alteration of the center lines (k) of the successive shaped pieces (1), the chain has a joint pin (x; x1, x2, x3), the cross section of which is conical in a linear, convex or concave way.

5. Chain according to claim 3 or 4, **characterized in that** in connection with the narrower end of the jointing point (N) of the chain there has been arranged locking means (10), such as a retainer groove (10a) and/or a cotter pin and/or ring (10b) in connection with the joint pin (x).

## Patentansprüche

1. Verfahren zur Bereitstellung eines Kettentriebs, wobei die Kette, wie beispielsweise eine Treibkette und/oder eine Förderkette, aus mehreren Formteilen (1) gebildet wird, die hintereinander in Reihe miteinander an Verbindungspunkten (N) mit Hilfe von Gelenkbolzen verbunden sind, deren Querschnitt sich in Längsrichtung (p) dieser Gelenkbolzen (x) ändert, wobei die Kette mit Hilfe einer Räderanordnung angetrieben wird, die zumindest ein Kettenrad (7) wie beispielsweise ein Triebrad oder ein Schwenkrad enthält, **dadurch gekennzeichnet, dass** der Verschleiß der Kette in Folge der Krümmung der Kette im Wesentlichen entlang der genannten Längsrichtung (p) minimiert wird durch die Bereitstellung von Gelenkbolzen (x), die über eine einheitlich ansteigende Querschnittsfläche entlang der genannten Längsrichtung (p) verfügen, so dass sich der Querschnitt in einer Richtung gegen das eine Ende des jeweiligen Gelenkbolzens (x) gleichmäßig konisch erweitert.

2. Verfahren gemäß Anspruch 1, wobei die tragende Oberfläche (1b) der im Zusammenhang mit dem Verfahren eingesetzten Kette Kerben (2) enthält, die in Beziehung auf die Bewegungsrichtung (s) der Kette im Wesentlichen kreuzweise angeordnet sind und die während des Transports der Kette in Kooperation mit den Oberflächen der Gegenstücke (9) wie beispielsweise zum Kettenrad (7) gehörenden Treibbolzen (9a) oder ähnlichen stehen, die entsprechend den Kerben (2a) und in Bezug auf die Bewegungsrichtung (s) im Wesentlichen kreuzweise angeordnet sind, wobei, um die genannten Verbindungspunkte (N) zu bilden, jedes Formteil (1) zwei Bindestellen (4, 5) besitzt, von denen die erste Bindestelle als ein einheitlicher Überstand (4) ausgeführt ist, welcher im Wesentlichen schmaler als die Breite des Formteils (1) ist, und die andere als Gabel (5), wobei in beiden Bindestellen (4, 5) Löcher (6) vorhanden sind, und wobei, um eine Kette zu bilden, jeder Verbindungspunkt (N) durch Zusammenfügen des genannten Überstands (4) eines vorherigen Formteils und der Gabel (5) eines folgenden Formteils und durch Einsetzen eines Gelenkbolzens (x) in die Löcher (6) gebildet wird, **dadurch gekennzeichnet, dass** die Kontaktfläche am Verbindungspunkt (N) aufgrund der wechselseitigen Winkeländerung der Mittellinien (k) der aufeinanderfolgenden Formteile (1) der Kette durch die Nutzung eines Gelenkbolzens (x, x1, x2, x3) erweitert wird, dessen Querschnitt auf lineare, konvexe oder konkave Art konisch ist.

3. Kette, wie beispielsweise eine Treibkette und/oder eine Förderkette, die aus mehreren Formteilen (1) gebildet wird, die hintereinander in Reihe miteinander an Verbindungspunkten (N) mit Hilfe von Gelenkbolzen (x) verbunden sind, deren Querschnitt sich in Längsrichtung (p) dieser Gelenkbolzen (x) ändert, wobei die Kette mit Hilfe einer Räderanordnung angetrieben wird, die zumindest ein Kettenrad (7) wie beispielsweise ein Triebrad oder ein Schwenkrad enthält, **dadurch gekennzeichnet, dass** zur Minimierung des Verschleißes der Kette in Folge der Krümmung der Kette im Wesentlichen entlang der genannten Längsrichtung (p) die Gelenkbolzen (x) der Kette über eine einheitlich ansteigende Querschnittsfläche entlang der genannten Längsrichtung (p) verfügen, so dass sich der Querschnitt in einer Richtung gegen das eine Ende des jeweiligen Gelenkbolzens (x) gleichmäßig konisch erweitert.

4. Kette nach Anspruch 3, deren tragende Oberfläche (1b) Kerben (2) enthält, die in Beziehung auf die Bewegungsrichtung (s) der Kette im Wesentlichen kreuzweise angeordnet sind und die während des Transports der Kette in Kooperation mit den Oberflächen der Gegenstücke (9) wie beispielsweise zum Kettenrad (7) gehörenden Treibbolzen (9a) oder ähnlichen stehen, die entsprechend den Kerben (2a) und in Bezug auf die Bewegungsrichtung (s) im Wesentlichen kreuzweise angeordnet sind, wobei, um die genannten Verbindungspunkte (N) zu bilden, jedes Formteil (1) zwei Bindestellen (4, 5) besitzt, von denen die erste Bindestelle als ein einheitlicher Überstand (4) ausgeführt ist, welcher im Wesentlichen schmaler als die Breite des Formteils (1) ist, und die andere als eine Gabel (5), wobei in beiden Bindestellen (4, 5) Löcher (6) vorhanden sind, und wobei, um eine Kette zu bilden, jeder Verbindungspunkt (N) durch Zusammenfügen des genannten Überstands (4) eines vorherigen Formteils und der Gabel (5) eines folgenden Formteils und durch Einsetzen eines Gelenkbolzens (x) in die Löcher (6) gebildet wird, **dadurch gekennzeichnet, dass** zur Erweiterung der Kontaktfläche am Verbindungspunkt (N) aufgrund der wechselseitigen Winkeländerung der Mittellinien (k) der aufeinanderfolgenden Formteile (1) die Kette mit einem Gelenkbolzen (x, x1, x2, x3) versehen ist, dessen Querschnitt auf lineare, konvexe oder konkave Art konisch ist.

5. Kette nach Anspruch 3 oder 4, **dadurch gekennzeichnet, dass** im Zusammenhang mit dem schmaleren Ende des Verbindungspunkts (N) der Kette am Gelenkbolzen (x) eine Sperrvorrichtung (10), wie beispielsweise eine Feststellnut (10a) und/oder ein Splint und/oder Ring (10b), angebracht ist.

## Revendications

1. Procédé destiné à fournir une transmission par chaîne, dans lequel la chaîne, comme une chaîne d'entraînement ou une chaîne transporteuse, est constituée de plusieurs pièces façonnées (1) reliées les unes aux autres à des points de jonction (N) à l'aide de goupilles d'articulation dont la section varie dans la direction longitudinale (p) de ces goupilles d'articulation (x), la chaîne étant entraînée à l'aide d'un système de roues comprenant au moins une roue dentée (7) comme une roue motrice ou une roue rotative, **caractérisé en ce que** l'usure de la chaîne due à sa flexion, principalement dans la direction longitudinale (p), est minimisée par des goupilles d'articulation (x) possédant une section uniformément croissante dans la direction longitudinale (p) de telle manière que la section est conique dans un sens vers une extrémité de la goupille d'articulation correspondante (x).

2. Procédé selon la revendication 1, dans lequel la surface porteuse (1b) de la chaîne utilisée selon ce procédé comporte des encoches (2) disposées perpendiculairement au sens de déplacement (s) de la chaîne et qui, pendant le déplacement de la chaîne en association avec les surfaces de la contre-partie (9) comme des goupilles d'entraînement (9a) ou équivalent appartenant à la roue dentée (7), disposées en fonction des encoches et essentiellement perpendiculairement au sens de déplacement (s), et dans laquelle, pour former les points de jonction (N) , chaque pièce façonnée (1) possède deux points de liaison (4, 5) dont le premier est une projection uniforme (4) d'une largeur inférieure à la largeur (1) de la pièce façonnée et dont l'autre est une fourche (5), les deux points de liaison (4, 5) comportant des trous (6), et dans laquelle, pour former une chaîne, chaque point de liaison (N) est constitué par le positionnement de ladite projection (4) d'une pièce précédemment façonnée dans la fourche d'une pièce façonnée suivante et par le positionnement d'une goupille d'articulation (x) dans les trous (6), **caractérisé en ce que** la surface de contact au point de jonction (N) due à la variation angulaire mutuelle des lignes médianes (k) des pièces façonnées (1) successives de la chaîne augmente grâce à une goupille d'articulation (x; x1, x2, x3) dont la section est conique de manière linéaire, convexe ou concave.

3. Chaîne comme une chaîne d'entraînement ou une chaîne transporteuse, constituée de plusieurs pièces façonnées (1) reliées les unes aux autres à des points de jonction (N) à l'aide de goupilles d'articulation (x) dont la section varie dans la direction longitudinale (p) de ces goupilles d'articulation (x), la chaîne étant entraînée à l'aide d'un système de roues comprenant au moins une roue dentée (7), comme une roue motrice ou une roue rotative, **caractérisée en ce que**, afin de minimiser l'usure de la chaîne due à sa flexion, principalement dans la direction longitudinale (p), les goupilles d'articulation (x) de la chaîne possèdent une section uniformément croissante dans la direction longitudinale (p), de telle manière que la section est conique dans un sens vers une extrémité de la goupille d'articulation correspondante (x) .

4. Chaîne selon la revendication 3, dont la surface porteuse (1b) comporte des encoches (2) disposées perpendiculairement au sens de déplacement (s) de la chaîne et qui, pendant le déplacement de la chaîne en association avec les surfaces de la contre-partie (9) comme des goupilles d'entraînement (9a) ou équivalent appartenant à la roue dentée (7), disposées en fonction des encoches (2a) et essentiellement perpendiculairement au sens de déplacement (s), et dans laquelle, pour former les points de jonction (N) , chaque pièce façonnée (1) possède deux points de liaison (4, 5) dont le premier est une projection uniforme (4) d'une largeur inférieure à la largeur (1) de la pièce façonnée et dont l'autre est une fourche (5), les deux points de liaison (4, 5) comportant des trous (6), et dans laquelle, pour former une chaîne, chaque point de liaison (N) est constitué par le positionnement de ladite projection (4) d'une pièce précédemment façonnée dans la fourche d'une pièce façonnée suivante et par le positionnement d'une goupille d'articulation (x) dans les trous (6), **caractérisée en ce que**, pour augmenter la surface de contact au point de jonction (N) due à la variation angulaire mutuelle des lignes médianes (k) des pièces façonnées (1) successives, la chaîne possède une goupille d'articulation (x ; x1, x2, x3) dont la section est conique de manière linéaire, convexe ou concave.

5. Chaîne selon la revendication 3 ou 4, **caractérisée en ce que**, en liaison avec l'extrémité étroite du point de jonction (N) de la chaîne, des dispositifs de blocage (10), comme une rainure de blocage (10a) et/ou une goupille fendue et/ou une bague (10b) ont été mis en place en liaison avec la goupille d'articulation (x).
